# EUROPÄISCHE PATENTSCHRIFT

(11) **EP 0 646 118 B1**
(45) Veröffentlichungstag und Bekanntmachung des Hinweises auf die Patenterteilung: **25.11.1998**
(21) Anmeldenummer: 93912966.4
(22) Anmeldetag: 14.06.1993
(51) Int. Cl.: C07F 9/09, C08K 5/55, C09K 21/12, C05B 15/00, C08G 8/08, C08J 9/00

(54) **HERSTELLUNG VON GEMISCHTEN BORSÄURE-PHOSPHOSÄURE-ESTERN VON POLYOLEN UND DEREN VERWENDUNG**
PREPARATION OF MIXED ESTERS OF BORIC ACID AND PHOSPHORIC ACID WITH POLYOLS AND THEIR USE
PREPARATION D'ESTERS MIXTES D'ACIDES BORIQUE ET PHOSPHORIQUE AVEC DES POLYOLS ET LEUR UTILISATION

(30) Priorität: 16.06.1992 DE 4219711
(43) Veröffentlichungstag der Anmeldung: 05.04.1995
(73) Patentinhaber: Chemische Fabrik Budenheim Rudolf A. Oetker, D-55257 Budenheim (DE)
(72) Erfinder: DORN, Karlheinz, D-6501 Budenheim (DE); FRANKENFELD, Klaus, D-6257 Hünfelden 1 (DE); NÄGERL, Hans-Dieter, D-6724 Dudenhofen (DE); SCHLARB, Sonja, D-6507 Ingelheim 4 (DE); SOMMER, Klaus, D-6702 Bad Dürkheim (DE)
(74) Vertreter: Weinhold, Peter, Dr.
(86) Internationale Anmeldenummer: EP9301497
(87) Internationale Veröffentlichungsnummer: WO9325560

(56) Entgegenhaltungen:
- US-A- 3 639 533
- US-A- 4 536 306
- US-A- 4 557 844
- Gmelin, Bor 19/3, Seiten 100-103

## Beschreibung

Die vorliegende Erfindung betrifft die Herstellung gemischter Borsäure-Phosphorsäure-Ester von Polyolen und die Verwendung derselben.

Die Herstellung sowohl von Borsäureestern als auch von Phosphorsäure-Estern ist z.B. aus den Standardwerken der technischen Chemie seit langem bekannt.

In Ullmann: Encyclopädie der technischen Chemie, 4. Auflage, Bd. 8, S. 653, wird z.B. die Herstellung von Borsäureestern beschrieben. Danach erfolgt diese Herstellung direkt aus Borsäure oder Bortrioxid und dem entsprechenden Alkohol. Das bei der Umsetzung entstehende Wasser wird durch Azeotrop-Destillation aus dem Reaktionsgleichgewicht entfernt. Als Wasserschlepper werden Benzol, Toluol, Xylol oder überschüssige primäre aliphatische Alkohole verwendet. Die Borsäure-Ester finden z.B. Verwendung als Oxidationsstabilisatoren in Zusätzen für Öle und Kraftstoffe, sowie als Hydraulik- und Bremsflüssigkeiten. Bor-modifizierte Phenolharze aus Phenylboraten und Formaldehyd werden als Bindemittel für flammbeständige Formteile wie z.B. Bremsbeläge verwendet. Methylund Ethylborat dienen zur Herstellung von Natriumboranat.

Phosphorsäure-Ester werden nach dem Stand der Technik im industriellen Maßstab durch Umsetzen von Alkoholen mit Phosphorylierungsmitteln wie Phosphorylchlorid, Phosphorpentoxid oder Polyphosphorsäuren hergestellt. In der US-A-4 100 231 wird auch die Veresterung von Orthophosphorsäure mit Alkoholen in Gegenwart beträchtlicher Mengen an Alkalihydroxid beschrieben.

Während die Umsetzung von Phosphorylchlorid mit Alkoholen unter entsprechenden Bedingungen die Erzeugung von Mono-, Di- und Triestern der Phosphorsäure gestattet, entsteht bei der Alkoholyse von Phosphorpentoxid grundsätzlich ein "Sesquiphosphat", das aus einem nahezu äquimolaren Gemisch von Mono- und Diestern der Phosphorsäure mit geringen Mengen an kondensierten Phosphorsäure-Estern besteht. Polyphosphorsäuren liefern bei der Alkoholyse Mischungen, die überwiegend aus Monoestern neben einem geringen Anteil an Diestern bestehen. Mit Orthophosphorsäure werden normalerweise nur Monoester gebildet.

Die Phosphorsäure-Ester bilden eine breitgefächerte Stoffklasse, die in vielen Bereichen Anwendung findet, z. B. als Tenside in Wasch- und Reinigungsmitteln, als Weichmacher in verschiedenen Kunststoffmaterialien, als Pflanzenschutzmittel, zur Metallextraktion und als Mittel zur Flammschutzausrüstung.

Die US-A-4 536 306 beschreibt teilweise borierte, Teilphosphatester von 1,2-gemischtem Pentadecaniol-Octadecaniol sowie teilweise borierte, Teilphosphatester des 1,2-Dodecandiols.

Ferner beschreibt die US-A-4 557 844 ein teilweises Säurephosphat des 1,2- gemischten Pentadecandiol-Octadecandiols, teilweise boriert.

Aufgabe der vorliegenden Erfindung war es, ein verbessertes Verfahren zur Herstellung der gemischten Borsäure-Phosphorsäure-Ester bereitzustellen.

Die obige Aufgabe wird durch das erfindungsgemäße Verfahren zur Herstellung gemischter Borsäure-Phosphorsäure-Ester von Polyolen gelöst, in dem mindestens eine zur Esterbildung befähigte Phosphor(V)verbindung und mindestens eine zur Esterbildung befähigte Borverbindung nebeneinander (d. h. in einer Eintopf-Reaktion) einer Veresterungsreaktion mit mindestens einem Polyol und/oder einem unter den gegebenen Bedingungen zur Esterbildung befähigten Polyol-Derivat unterzieht werden.

Vorzugsweise wird diese Veresterungsreaktion unter kontinuierlicher Entfernung der bei der Reaktion gebildeten Nebenprodukte und des gegebenenfalls eingesetzten Lösungsmittels durchgeführt. Dies trifft insbesondere dann zu, wenn (wie in einer besonders bevorzugten Ausführungsform der vorliegenden Erfindung) bei der Veresterung Wasser als Nebenprodukt entsteht bzw. Wasser zusätzlich auch als Lösungsmittel eingesetzt wird.

Als zur Esterbildung befähigte Borverbindung können alle Verbindungen eingesetzt werden, von denen bekannt ist, daß sie unter geeigneten Bedingungen mit Alkoholen bzw. zur Esterbildung grundsätzlich befähigten Derivaten davon eine Veresterungsreaktion eingehen können. Konkrete Beispiele hierfür sind B₂O₃, Borsäure (H₃BO₃), Metaborsäure (HBO₂), sowie Borhalogenide (z.B. BF₃, BCl₃ und BBr₃) und Borsäure-Ester wie Triethylborat und Trimethylborat, die bei der Umsetzung mit (im Vergleich zu Monoalkoholen reaktiveren) Polyolen einer Umesterung unterliegen.

Erfindungsgemäß bevorzugte Borverbindungen sind insbesondere wegen ihrer leichten Zugänglichkeit und Handhabbarkeit B₂O₃ und Borsäure. Borsäure wird üblicherweise in kristallisierter Form eingesetzt.

Als zur Esterbildung befähigte Phosphorverbindungen können wie im Fall der Borverbindungen alle Verbindungen des (fünfwertigen) Phosphors eingesetzt werden, von denen bekannt ist, daß sie bei Umsetzung mit einem Alkohol bzw. einem zur Esterbildung befähigten Derivat davon (z.B. Carbonsäureester) eine Veresterungsreaktion eingehen. Konkrete Beispiele hierfür sind P₂O₅, Orthophosphorsäure und Polyphosphorsäuren, sowie halogenierte Verbindungen wie z.B. Phosphorylchlorid (POCl₃) und PCl₅, Phosphorsäureester (insbesondere von Monoalkoholen) und dergleichen. Gemäß einer besonders bevorzugten Ausführungsform der vorliegenden Erfindung wird Orthophosphorsäure, insbesondere wasserhaltige Phosphorsäure, die z.B. durch den thermischen Prozess oder durch Reinigung von Naßverfahrens-Phosphorsäure gewonnen wurde, eingesetzt. Derartige Phosphorsäuren haben eine handelsübliche Konzentration von 75 bis 86 Gew.-% H₃PO₄.

Die erfindungsgemäß einsetzbaren Polyole können aliphatischer, cycloaliphatischer und aromatischer Natur sein und primäre, sekundäre und/oder tertiäre Hydroxylgruppen enthalten. Bevorzugt werden aliphatische und cycloaliphatische Polyole, da bei Verwendung von aromatischen Polyolen gelegentlich eine Verfärbung der Reaktionsprodukte auftritt, was bei bestimmten Anwendungen unerwünscht ist. Unter Berücksichtigung der Reaktivität wird es ebenfalls bevorzugt, Polyole einzusetzen, die (zumindest teilweise) über primäre und/oder sekundäre Hydroxylgruppen verfügen. Im allgemeinen beträgt die Kohlenstoffzahl der erfindungsgemäß eingesetzten Polyole 2 bis 20, insbesondere 2 bis 6. Die Zahl der OH-Gruppen in diesen Polyolen liegt vorzugsweise im Bereich von 2 bis 12, insbesondere im Bereich von 2 bis 6. Besonders bevorzugt wird es auch, wenn die eingesetzten Polyole zur Bildung von cyclischen Estern mit 5- und insbesondere 6-gliedrigem Ring befähigt sind. Dies trifft auf Polyole zu, die Hydroxygruppen in 1,2- und insbesondere 1,3-Stellung aufweisen. Vorzugsweise weisen die erfindungsgemäß eingesetzten Polyole ein Molekulargewicht im Bereich von 62 (Ethylenglykol) bis 182 (z.B. Mannit) auf.

Die eingesetzten Polyole können zusätzlich zu den (mindestens zwei) Hydroxylgruppen noch andere funktionelle Gruppen tragen, z.B. Halogen (insbesondere Cl und F), Alkoxy (insbesondere C₁-C₄ Alkoxy wie z.B. Ethoxy und Methoxy), Etherbrücken im Grundgerüst (z.B. Polyalkylenglykole) und (vorzugsweise tertiäre) Aminogruppen. Die Polyole können z.B. auch in Form von Verbindungen mit geschützten Hydroxylgruppen (z.B. Estergruppen) eingesetzt werden oder können zusätzlich zu freien Hydroxylgruppen derartige geschützte Hydroxylgruppen aufweisen. Über Estergruppen können, wenn diese keiner merklichen Umesterung unterliegen, auch weitere funktionelle Gruppen in den gewünschten Ester eingeführt werden, die später zu weiteren Reaktionen der erfindungsgemäßen Borsäure-Phosphorsäure-Ester herangezogen werden können. So kann z.B. ein (Meth)acrylsäurerest später für Polymerisationsreaktionen unter Beteiligung der Kohlenstoff-Kohlenstoff-Doppelbindung mit anderen olefinisch ungesättigten Verbindungen herangezogen werden.

Konkrete Beispiele für erfindungsgemäß einsetzbare Polyole sind Diole, wie z.B. Ethandiol, 1,2- und 1,3-Propandiol, 1,2-, 1,3-, 1,4- und 2,3-Butandiol und Pinacol; Triole, wie z.B. Glycerin, Trimethylolmethan, -ethan und -propan; Tetrole, wie Erythrit und Pentaerythrit; Pentole, wie Arabit und Xylit; Hexole, wie Mannit und Sorbit; sowie Di- und Polypentaerythrite, Inosite und aromatische Polyole wie 1,4-Dimethylolbenzol, 2,4-Dimethylol-1,3-dihydroxybenzol, Dihydroxybenzole (insbesondere Brenzkatechin) und Trihydroxybenzole.

Erfindungsgemäß besonders bevorzugte Polyole sind Ethandiol, Trimethylolpropan, Pentaerythrit und Mannit.

Konkrete Beispiele für Polyole, die andere funktionelle Gruppen enthalten, sind z.B. Monoethanolamin, Diethanolamin und Triethanolamin, Diethylenglykol und Dipropylenglykol sowie 3-Chlor-1,2-propandiol. Als Esterverbindungen können z.B. (Meth)acrylsäure-, Ameisensäure-, Essigsäure- und Propionsäureester eingesetzt werden.

Die erfindungsgemäß einsetzbaren Polyole sind jedoch nicht auf monomere Verbindungen beschränkt, sondern es können auch polymere Verbindungen eingesetzt werden, wie z.B. Polyvinylalkohol bzw. (teilweise) verseiftes Polyvinylacetat oder Polyalkylenglykole mit hohem Kondensationsgrad. Vorzugsweise werden derartige Verbindungen in Mischung mit monomeren Polyolen eingesetzt, wobei auch bei alleiniger Verwendung von monomeren Polyolen der Einsatz von Mischungen für bestimmte Anwendungen der entsprechenden Endprodukte vorteilhaft sein kann. Schließlich können die Polyole, falls gewünscht, auch in Mischung mit Monoalkoholen wie z.B. Methanol und Ethanol eingesetzt werden. Derartige Monoalkohole stellen ohnehin Reaktionsnebenprodukte dar, wenn eines oder mehrere der eingesetzten Bor- und Phosphor-Ausgangsmaterialien in Form eines Esters mit einem derartigen Alkohol eingesetzt wird. Die Verwendung eines Monoalkohols kann z.B. zwecks Modifizierung der erfindungsgemäßen gemischten Ester (bei Einsatz von Polyolmengen, die nicht ausreichen, um alle zur Verfügung stehenden veresterbaren Säuregruppen zu verestern) oder als Schleppmittel für bei der Veresterung gebildetes Wasser (Azeotropbildung) erfolgen.

Im allgemeinen werden die Borverbindungen und Phosphorverbindungen in solchen Mengenverhältnissen eingesetzt, daß das Atomverhältnis B/P im Berich von 5/95 bis 95/5 liegt. Bevorzugt liegt dieses Verhältnis im Bereich von 9/1 bis 1/9 und besonders bevorzugt im Bereich von 7/3 bis 3/7. Für eine Vielzahl von Anwendungsfällen hat sich ein B/P-Verhältnis von ungefähr 1/1 (z.B. von 1,5/1 bis 1/1,5 als besonders günstig erwiesen.

Im Fall der erfindungsgemäß besonders bevorzugten und weiter unten detaillierter beschriebenen Umsetzung der Ausgangsmaterialien im wäßrigen Medium kann durch das B/P-Verhältnis auch der Veresterungsgrad der Säurekomponente beeinflußt werden. So wurden mit verschiedenen Polyolen mit Molekulargewichten im Bereich von 62 bis 182 und OH-Gruppen-Zahlen von 2 bis 6 Untersuchungen mit verschiedenen B/P-Verhältnissen der eingesetzten Ausgangsmaterialien vorgenommen. Das Molverhältnis Säure (Phosphorsäure + Borsäure)/Polyol war dabei in allen Fällen 1/1. Als Mittelwert aus diesen Versuchen wurden folgende Ergebnisse erhalten:

| | | | |
|---|---|---|---|
| B/P-Verhältnis : | 0,5/1,0 | 1,0/1,0 | 2,0/1,0 |
| durchschnittlich veresterte Säure-OH-gruppen pro Säuremolekül | 1,11 | 1,45 | 2,00 |

Die obigen Ergebnisse zeigen, daß eine lineare Beziehung zwischen dem B/P-Verhältnis in den Ausgangsmaterialien und dem Veresterungsgrad der Säure besteht. Bei einem B/P-Verhältnis von 0,5/1,0 werden (im Durchschnitt) vorwiegend Säure-Monoester mit einem geringen Anteil von Säure-Diestern gebildet, während bei einem B/P-Verhältnis von 1/1 annähernd gleich viel Mono- und Diester erhalten werden. Bei einem B/P-Verhältnis von 2/1 werden (im Durchschnitt) nur Säure-Diester gebildet. Es besteht somit die Möglichkeit, mit Hilfe des B/P-Verhältnisses den Veresterungsgrad der erhaltenen Säuren zu beeinflussen.

Auch das Verhältnis von eingesetzter Säure zu eingesetztem Polyol (Alkohol) hat erwartungsgemäß einen Einfluß auf die chemische Natur der erhaltenen Endprodukte. Erfindungsgemäß wird es bevorzugt, daß das Molverhältnis von Polyol zu insgesamt vorhandenen (monomeren) Bor- und Phosphorverbindungen nicht höher als 3:1 gewählt wird (zumindest dann, wenn die Umsetzung nicht in überschüssigem Polyol als Lösungsmittel durchgeführt werden soll). Besonders bevorzugt liegt das Molverhältnis von Polyol zu Bor- plus Phosphorverbindungen nicht über 2:1. Desgleichen wird es bevorzugt, pro Mol Phosphorverbindung plus Borverbindung mindestens zwei und insbesondere mindestens drei Moläquivalente Polyol einzusetzen. (Die oben angegebenen Verhältnisse beziehen sich auf den Fall, bei dem ausschließlich Polyol, d.h. kein zusätzlicher Monoalkohol, eingesetzt wird.)

Im Normalfall wird ein Molverhältnis Säure/Polyol von ungefähr 1/1 (z.B. 1,5/1 bis 1/1,5) gewählt, wodurch im wesentlichen Gemische von Mono- und Diestern erhalten werden. Will man jedoch Ester mit einem hohen Anteil an Polyol-Triestern herstellen (was naturgemäß nur möglich ist, wenn Polyole mit mindestens drei Hydroxylgruppen eingesetzt werden), so muß das Säure/Polyol-Verhältnis säurelastig verändert werden. Umgekehrt ist es zur Herstellung von Estern mit schwach sauren Eigenschaften günstiger, das Säure/Polyol-Verhältnis alkohollastig zu verändern. Die besten Ergebnisse werden in der Regel mit einem Molverhältnis Säure : Alkohol im Bereich von 2:1 zu 1:2 erhalten.

Mit verschiedenen Polyolen mit Molekulargewichten im Bereich von 62 bis 182 und OH-Gruppenzahlen von 2 bis 6 und einem B/P-Verhältnis in den Ausgangsmaterialien von 1/1 wurden Veresterungsreaktionen im wäßrigen Medium untersucht, bei denen das Molverhältnis Säure/Polyol im Bereich von 1,0/2,0 bis 2,0/1,0 variiert wurde. Aus den erhaltenen Ergebnissen wurden die veresterten Gruppen, sowohl bezogen auf ein Säuremolekül als auch bezogen auf ein Polyolmolekül, berechnet. Dabei wurden die folgenden Mittelwerte gefunden:

| | | | |
|---|---|---|---|
| Säure/Polyol-Molverhältnis | 1,0/2,0 | 1,0/1,0 | 2,0/1,0 |
| Veresterte Hydroxylgruppen pro Polyolmolekül | 0,68 | 1,36 | 2,67 |
| | | | |
| Veresterte Gruppen pro Säuremolekül | 1,37 | 1,36 | 1,33 |

Die obigen Ergebnisse zeigen, daß der Veresterungsgrad des Polyols bei konstantem B/P-Verhältnis linear vom Molverhältnis Säure/Polyol abhängt.

Die Umsetzung von Borverbindung und Phosphorverbindung mit Polyol muß erfindungsgemäß nicht notwendigerweise so erfolgen, daß alle Reaktanten bereits zu Beginn der Reaktion und in der gesamten einzusetzenden Menge vorhanden sind.

Ebenso können die Bor- und Phosphorverbindungen zunächst mit einem bestimmten Polyol umgesetzt werden, worauf ein oder mehrere vom bereits zugegebenen Polyol verschiedene Polyole der Reaktionsmischung zugesetzt werden.

Falls erforderlich, können der Reaktionsmischung auch übliche Veresterungskatalysatoren zugesetzt werden, obwohl dies in den meisten Fällen nicht erforderlich sein wird.

Die Reaktionstemperatur richtet sich nach der Reaktivität der eingesetzten Ausgangsmaterialien. Während bei sehr reaktiven Ausgangsmaterialien, wie z.B. Bor- und Phosphor-Halogenverbindungen sogar eine Kühlung erforderlich sein kann, wird es beim Einsatz von Borsäure und Phosphorsäure (im wäßrigen Medium) bevorzugt, bei Raumtemperatur und insbesondere bei leicht erhöhter Temperatur zu arbeiten. Besonders bevorzugte Temperaturbereiche sind 50 bis 150°C, insbesondere 90 bis 130°C (z.B. 95 bis 125°C). Der maximal einsetzbaren Temperatur sind u.a. durch die Flüchtigkeit und die Zersetzungstemperatur der eingesetzten Ausgangsmaterialien (insbesondere des Polyols) bzw. der gewünschten Ester Grenzen gesetzt.

An verschiedenen Rezepturen, die sich sowohl in der Polyolspezifikation als auch im B/P-Verhältnis unterschieden, wurden Veresterungen im wäßrigen Medium bei einer Heizbad-Temperatur von 98°C bis 120°C unter vergleichbaren Bedingungen durchgeführt. Dabei wurde gefunden, daß in allen Fällen bei der höheren Temperatur ein höherer Veresterungsgrad erreicht wurde. Im Mittel betrug diese Erhöhung 24 %.

Die Borsäure-Phosphorsäure-Ester weisen vorzugsweise einen Bor- und Phosphor-Gehalt auf, der innerhalb der folgenden Grenzen liegt:

| | |
|---|---|
| Bor (berechnet als B₂O₃) | 1,4 bis 25,0 Gew.-% |
| Phosphor (berechnet als P₂O₅) | 3,2 bis 44,0 Gew.-%. |

Vorzugsweise machen die von den eingesetzten Polyolen (Alkoholen) abgeleiteten organischen Reste 48,0 bis 83,0 Gew.-% der erfindungsgemäßen Borsäure-Phosphorsäure-Ester aus.

Beim Arbeiten im wäßrigen Medium fallen die gemischten Borsäure-Phosphorsäure-Ester in der Regel als viskose Lösungen an. Nach dem Erkalten auf Zimmertemperatur erstarren sie und bilden je nach ihrer Zusammensetzung hochviskose, pastöse oder feste Massen. Die Farbe der Ester reicht von glasklar über opal bis weiß. Sie sind in der Regel geruchlos und nicht hygroskopisch. Sie weisen intumeszierende Eigenschaften auf, d.h. sie blähen sich beim Erhitzen auf und bilden durch Zersetzung feste Gerüststrukturen. Weiter sind die erfindungsgemäßen Borsäure-Phosphorsäure-Ester in der Regel wasserlöslich und bilden farblose Lösungen mit einem sauren pH-Wert, der je nach Zusammensetzung der Ester bei 1%igen Lösungen im Bereich von 1,8 bis 2,5 liegt.

Aufgrund ihrer sauren Eigenschaften lassen sich aus den Borsäure-Phosphorsäure-Estern Salze herstellen. Die Herstellung der Salze erfolgt vorzugsweise ih wäßriger Lösung und mit Esterkonzentrationen von 1 bis 80 Gew.%, vorzugsweise 5 bis 30 Gew.-%. Der Bedarf an der zur Salzbildung erforderlichen Kationenmenge kann z.B. vorher durch Titration des Esters mit einer eingestellten Natronlauge ermittelt werden. Vorzugsweise werden zur Salzbildung Alkalimetalle (insbesondere Natrium und Kalium), Erdalkalimetalle (insbesondere Magnesium) und (organische) Stickstoffverbindungen herangezogen. Diese können z.B. in Form der freien Basen oder als Karbonatsalze in der berechneten Menge mit den wäßrigen Esterlösungen umgesetzt werden. Als organische Stickstoffverbindungen eignen sich insbesondere Di- und Polyamine. wie z.B. Ethylendiamin, Diethylentriamin, Hexamethylentetramin, Melamin und Guanidin. Bei der Salzbildung mit den beiden letztgenannten Aminen fallen schwerlösliche Salze an. Diese können in üblicher Weise filtriert und getrocknet werden, wobei ein Nachwaschen des Filterkuchens nicht erforderlich ist.

Gemäß einer besonders bevorzugten Ausführungsform der vorliegenden Erfindung werden die Borsäure-Phosphorsäure-Ester im wäßrigen Medium hergestellt, obwohl prinzipiell alle Lösungsmittel eingesetzt werden können, die mit den verwendeten Ausgangsmaterialien nicht reagieren bzw. die Veresterungsreaktion nicht beeinträchtigen. Beispiele hierfür sind Monoalkohole (z.B. Methanol, Ethanol, Propanol), Ester, Ether, Ketone, aromatische Verbindungen, wie Toluol und Xylole usw. Wie bereits oben erwähnt, kann auch ein Polyolüberschuß als Lösungsmittel eingesetzt werden.

Die bekannten Methoden zur Herstellung von Borsäure- und Phosphorsäure-Estern vermeiden die Anwesenheit von Wasser bei der Veresterungsreaktion. Deshalb werden als Rohstoffe nur wasserfreie Substanzen eingesetzt; die Anionen werden dabei in Form ihrer Anhydride oder als kondensierte Säuren zur Veresterung gebracht.

Es ist deshalb äußerst überraschend, daß es gelingt, die gemischten Borsäure-Phosphorsäure-Ester von Polyolen aus wäßrigen Lösungen herzustellen. Andererseits hat die Herstellung aus wäßrigen Lösungen den großen Vorteil, daß als Ausgangsmaterialien im großindustriellen Maßstab hergestellte und deshalb sehr preisgünstige Phosphor- und Borverbindungen, wie z.B. wäßrige Phosphorsäure und Borsäure, eingesetzt werden können. Darüberhinaus läßt sich die Veresterungsreaktion im wäßrigen Medium gegenüber dem Stand der Technik ohne eine umständliche, aufwendige und zeitraubende Prozeßkontrolle durchführen. In der wäßrigen Ansatz lösung können bereits alle Ausgangsmaterialien, die zur Bildung der gemischten Ester erforderlich sind, gelöst (oder auch nur dispergiert) werden. Nebenreaktionen oder Zersetzungsreaktionen, die bei dem herkömmlichen Verfahren zur Herstellung von Phosphorsäureestern durch Fehldosierung möglich sind, werden ausgeschlossen. Mit der Rezeptur der Ansatz lösung kann die Zusammensetzung des Produkts endgültig festgelegt werden.

Die Veresterungsreaktion verläuft im Vergleich zur Herstellung von reinen Phosphorsäureestern im vorliegenden Fall überraschend schnell, was möglicherweise mit einer katalytischen Wirkung der ebenfalls anwesenden Borsäureverbindung erklärt werden kann.

Die Ausgangsmaterialien können beim Arbeiten im wäßrigen Medium z.B. (gegebenenfalls unter Erwärmung) im Prozeßwasser gelöst und als homogene wäßrige Ansatz lösung chargenweise oder kontinuierlich in einem Vakuum-Verdampfer zur Reaktion gebracht werden. Vorteilhaft lassen sich Dünnschichtverdampfer verwenden. Während der Reaktion verdampfen das zugesetzte Prozeßwasser und das durch Esterbildung freigesetzte Reaktionswasser. Die Reaktion ist beendet, wenn kein Wasser mehr aus dem Reaktanten abgespalten wird. Das verdampfte Wasser kann kondensiert werden, um aus der Mengenbilanz des Wassers den Veresterungsgrad zu bestimmen. Außerdem kann das abgezogene Wasser erneut als Prozeßwasser eingesetzt werden.

Das Reaktionswasser hat die Funktion eines Lösungsmittels und dient der Herstellung der wäßrigen Ansatz lösung für die Produktion der erfindungsgemäßen Ester. Sie kann alle erforderlichen Reaktanten in den erforderlichen Mengen in gelöster Form enthalten.

Die erforderliche Wassermenge (beim Arbeiten in Lösung) richtet sich nach der Wasserlöslichkeit der einzelnen Komponenten, dem Wassergehalt der gegebenenfalls (und vorzugsweise) eingesetzten Orthophosphorsäure und, insbesondere wenn ein Gemisch von verschiedenen Polyolen verwendet wird, nach der gegenseitigen Beeinflussung der Löslichkeiten der eingesetzten Polyole. Der Wasserbedarf kann minimiert werden, wenn die Herstellung der wäßrigen Ansatz lösung in einem Temperaturbereich von 50 bis 90°C, vorzugsweise 60 bis 80°C, durchgeführt wird. Der Wassergehalt der wäßrigen Ansatz lösung schwankt daher im allgemeinen im Bereich von 15 bis 55, insbesondere 20 bis 40 Gew.-%. Ein Wassergehalt von 30 bis 40 Gew.-% der wäßrigen Ansatzlösung ist in der Regel besonders vorteilhaft.

Die Veresterung im wäßrigen Medium erfolgt vorzugsweise durch Verdampfen des Wassers aus dünnen Flüssigkeitsfilmen der Ansatzlösung. Dies kann z.B. mit Hilfe eines Vakuum-Dünnschichtverdampfers geschehen, der vorzugsweise in einem Temperaturbereich von 95 bis 125°C (Heizmitteltemperatur) und einem Druck von 20 bis .60 mbar betrieben wird. Bei der Esterproduktion im Chargenbetrieb, z.B. in einem Rotationsverdampfer, ist unter den oben beschriebenen Bedingungen eine Verweilzeit von 60 bis 80 Minuten ausreichend, um das Veresterungsgleichgewicht einzustellen. Durch den Wegfall einer zeitabhängigen Prozeßkontrolle und -steuerung ist die Produktion der erfindungsgemäßen Borsäure-Phosphorsäure-Ester jedoch nicht mehr an den Chargenbetrieb gebunden. Somit können die erfindungsgemäßen Ester auch im kontinuierlichen Betrieb hergestellt werden.

Die produzierte Menge an Borsäure-Phosphorsäure-Ester pro Zeiteinheit hängt von verschiedenen Parametern ab. Diese Parameter sind insbesondere die verdampfte Wassermenge, die aus der wäßrigen Ansatzlösung resultiert, und die Verdampferleistung des Vakuum-Verdampfers, die sich wiederum aus der Druck- und Temperatureinstellung ergibt. Unter den oben angegebenen Herstellungsbedingungen ist es möglich, Ester in einer Größenordnung von 30 bis 70 kg pro Stunde auf einer Verdampferfläche von 1 m² kontinuierlich zu produzieren.

Neben den Dünnschichtverdampfern vom Typ der Rotations- oder Fallfilmverdampfer sind für die erfindungsgemäße Herstellung der vorliegenden Ester alle Verdampfungsreaktoren besonders geeignet, die einen sich ständig erneuernden Flüssigkeitsfilm unter den angegebenen Temperatur- und Druckbedingungen aufbauen können.

Durch die verschiedenen Variablen, die in dem System der Borsäure-Phosphorsäure-Ester vorhanden sind, kann durch den gleichen Herstellungsprozess eine Vielzahl der verschiedensten gemischten Estertypen gewonnen werden, die für die verschiedensten Verwendungszwecke brauchbar sind. Die Vielzahl der herstellbaren gemischten Borsäure-Phosphorsäure-Ester erschließt dieser Gruppe von Verbindungen sehr breite Anwendungsgebiete, von denen einige im folgenden beispielhaft beschrieben werden sollen. Dabei können die Ester entweder als solche oder in Salzform und/oder in Mischung mit Kunststoffen und Polymerisaten eingesetzt werden.

Ein breites Anwendungsfeld die Ester ist die Flammschutzausrüstung von Papier, Papierprodukten, Wellpappe, Holz (z.B. Faserplatten, Spanplatten usw.), textilen Materialien, Kunststoffen, Baumaterialien und anderen brennbaren Materialien. Die erfindungsgemäßen Ester bringen-dafür die besten Voraussetzungen mit und führen gegenüber bislang zu diesem Zweck eingesetzten Materialien zu verbesserten Ergebnissen.

Die Ester, insbesondere diejenigen mit einem relativ hohen P-Gehalt, eignen sich besonders gut für die flammhemmende Ausrüstung von brennbaren Materialien (Brandschutz). Daneben enthalten diese Ester einen B-Anteil. Diese verhindert im Brandfall das Nachglimmen (insbesondere von Cellulosematerialien) und unterdrückt die Entwicklung von Rauchgasen. Der organische Teil der erfindungsgemäßen Ester rührt von den eingesetzten Polyolen her und führt im Brandfall zu intumeszierenden Deckschichten, die die Ausbreitung der Flammen begrenzen. Da die anorganischen Komponenten (B,P) der erfindungsgemäßen Ester sich in Verbindung mit einem großen organischen Rest befinden, können diese anorganischen Komponenten problemlos in organische Polymere eingearbeitet werden. Im Brandfall reagieren die P- und B-Komponenten der Ester miteinander und bilden unlösliches, festes Borphosphat, wodurch ein positiver Beitrag zum Umweltschutz geleistet wird.

Bei der Flammfestausrüstung von unterschiedlichen brennbaren Materialien mit flammhemmenden Stoffen können keine allgemein verbindlichen Aussagen gemacht werden, da jeder spezielle Anwendungsfall eine andere Technik erfordert und dabei auch Wechselwirkungen zwischen dem brennbaren Material und dem flammhemmenden Stoff zum Tragen kommen. Deshalb sollen im folgenden einige spezielle Fälle zwecks Veranschaulichung detaillierter beschrieben werden.

Zur Flammfestausrüstung von Papier und Papierprodukten werden die erfindungsgemäßen Ester vorzugsweise in Form von wäßrigen Lösungen eingesetzt. Besonders bevorzugt enthalten diese wäßrigen Lösungen zusätzlich dispergierte Acrylate, was sich insbesondere bei der Flammschutzausrüstung von Wellpappe sehr vorteilhaft bemerkbar macht. Weiterhin werden zur Flammfestausrüstung von Papier, Papierprodukten und Wellpappe vorzugsweise solche Borsäure-Phosphorsäure-Ester eingesetzt, bei denen pro Molekül Polyol durchschnittlich 1,0 bis 1,5 OH-Gruppen verestert sind. Weiterhin werden zur Herstellung derartiger Ester vorzugsweise Polyole eingesetzt, die einen OH-Gruppengehalt von mindestens etwa 40 Gew.-%, vorzugsweise mindestens etwa 45 Gew.-%, aufweisen.

Die Flammschutzausrüstung von Papier, Papierprodukten und Wellpappe kann z.B. durch Tauchen oder Besprühen des Papiers, der Papierprodukte und der Wellpappe mit der wäßrigen Lösung und anschließendes Trocknen erfolgen. Vorzugsweise werden die erfindungsgemäßen Ester des geeigneten Typs in einer solchen Menge aufgebracht, daß sich in dem behandelten und getrockneten Material ein B₂O₃-Gehalt von 1,6 bis 2,4 Gew.-% und ein P₂O₅-Gehalt von 5,5 bis 8,5 Gew.-% einstellt.

Die gemischten Borsäure-Phosphorsäure-Ester sind insbesondere in Mischung mit wäßrigen Polyvinylacetatdispersionen auch zur Flammfestausrüstung von Teppichen und anderen Schwertextilien geeignet. Z.B. kann zu diesem Zweck eine Mischung aus einer ca. 50%igen wäßrigen Polyvinylacetatdispersion und dem unverdünnten Borsäure-Phosphorsäure-Ester auf die Rückseite des Teppichs aufgetragen und eingetrocknet werden. Gegebenenfalls können auch Zuschläge von anderen anorganischen Stoffen, wie z.B. Aluminiumhydroxid, in die obige Mischung eingearbeitet werden. Die so flammfest ausgerüsteten Teppiche weisen vorzugsweise einen B₂O₃-Gehalt von 1,6 bis 2,7 Gew.-% und einen P₂O₅-Gehalt von 5,9 bis 9,5 Gew.-% auf.

Zur Flammfestausrüstung von Textilien werden die erfindungsgemäßen Ester vorzugsweise ebenfalls in Form von wäßrigen Lösungen eingesetzt. Derartige wäßrige Lösungen sind besonders bevorzugt, wenn sie zusätzlich ein Präpolymerisat enthalten. Bevorzugte Präpolymerisate sind solche auf der Basis von Acrylaten und Präpolymerisate, die basisch reagierende Stickstoffgruppen enthalten.

Zur Flammfestausrüstung von Textilien eignen sich insbesondere diejenigen erfindungsgemäßen Ester, bei denen pro Molekül Polyol im Durchschnitt 1,0 bis 2,0, insbesondere 1,0 bis 1,7 OH-Gruppen, verestert sind. Weiterhin werden zur Herstellung von erfindungsgemäßen Estern, die für die Flammfestausrüstung von Textilien besonders geeignet sind, vorzugsweise Polyole eingesetzt, die einen OH-Gruppengehalt von ungefähr 50 Gew.-% (z.B. 45 bis 55 Gew.-%) haben.

Wie bei der Flammfestausrüstung von Papier und dergleichen kann die Flammfestausrüstung von Textilien ebenfalls z.B. durch Tauchen oder Besprühen der Textilien und anschließendes Trocknen erfolgen. Vorzugsweise weisen die so behandelten Textilien danach einen B₂O₃-Gehalt von 1,1 bis 3,4 Gew.-% und einen P₂O₅-Gehalt von 2,3 bis 6,9 Gew.-% auf.

Weiterhin finden die Borsäure-Phosphorsäure-Ester Anwendung bei der Herstellung von flammhemmenden Farben oder Beschichtungen, die bei der großflächigen Flammfestausrüstung von Gebäuden, Stahlkonstruktionen oder einzelnen Bauteilen benötigt werden. Auch in diesen Anwendungsfällen kommen die vorstehend beschriebenen Eigenschaften dieser Ester zum Tragen. Sie können z.B. Präpolymerisaten zugefügt und dann auf die zu schützenden Bauteile aufgetragen werden. Beim Aushärten der Schutzschichten treten chemische Reaktionen zwischen Ester und Präpolymerisat auf.

Die gemischten Borsäure-Phosphorsäure-Ester sind (insbesondere in Form ihrer Salze) auch für die Flammfestausrüstung von Kunststoffen, wie Polyamiden, Polyolefinen, wie Polyethylen, Polypropylen und dergleichen geeignet. Für diesen Zweck haben sich Melaminsalze als besonders brauchbar erwiesen. Diese Melaminsalze sind thermisch sehr stabile Verbindungen, deren Zersetzungstemperaturen im Bereich von 270 bis 320°C liegen. Sie können deshalb ohne Zersetzung z.B. in einem Extruder in die aufgeschmolzenen Kunststoffe eingearbeitet werden. Die Melaminsalze der erfindungsgemäßen Ester sind in der Regel sehr feinteilige, schuppige, perlmuttartig glänzende Verbindungen. Da sie keine abrasiven Eigenschaften aufweisen, schonen sie bei der Verarbeitung die Extruderwerkzeuge. Überdies sind sie sehr wenig wasserlöslich. In einer wäßrigen 10%igen Suspension der Melaminsalze wird der Leitwert nur um 170 bis 250 µS erhöht. Diese Eigenschaft verhindert das spätere Ausbluten der Flammschutzkomponente aus dem Kunststoff und damit eine Reduzierung des elektrischen Widerstandes der entsprechend ausgerüsteten Kunststoffe.

Phenolharzgebundene Vliesstoffe zur Schallabsorption werden aus Reißfasergut, Glasfasern, Polyacrylfasern und Phenolharzen (Novolaken) hergestellt. Als ausgehärtete Formteile finden sie Anwendung im Automobilbau und in Haushaltsgeräten. Die so hergestellten Produkte müssen in ihrem Brandverhalten die Anforderungen nach den Standarden DIN 54333 und 75200 erfüllen. Von manchen Verbrauchern wird jedoch ein erhöhter Brandschutz gefordert, der dem Volvo Fire Test STD 1027, 5188 entspricht.

Es wurde gefunden, daß durch Zumischung der Borsäure-Phosphorsäure-Ester (z.B. in Form ihrer Melaminsalze) zu Phenolharzen der erhöhte Brandschutz gemäß der Volvo-Norm erreicht wird. Der hierfür ausreichende Melaminsalzgehalt des Phenolharzes schwankt in der Regel im Bereich von 15 bis 35 Gew.-%. Vorzugsweise weisen mit den erfindungsgemäßen Estern ausgerüstete Dämmvliesstoffe einen B₂O₃-Gehalt von 0,8 bis 1,8 Gew.-%, einen P₂O₅-Gehalt von 2,2 bis 3,2 Gew.-% und einen N-Gehalt von 2,0 bis 8,0 Gew.-% auf.

Ein weiteres großes Anwendungsgebiet für die Borsäure-Phosphorsäure-Ester ist durch deren saure Eigenschaften in Verbindung mit einem großen organischen Rest gegeben. Insbesondere sind die erfindungsgemäßen Ester mittelstarke Säuren mit anorganischen und organischen funktionellen Gruppen. Sie sind deshalb als saure Katalysatoren bei der Verarbeitung von Kunststoffen, insbesondere bei der Verarbeitung von säurehärtenden Kunststoffen, zur Steuerung des Abbindeprozesses geeignet. Gegenüber den herkömmlichen Härtern, die in der Regel aus starken anorganischen Säuren bestehen und zu einem schnellen, nicht steuerbaren Abbinden führen, können durch die Verwendung der erfindungsgemäßen Ester die Abbindezeiten beliebig verlängert werden. Diese Verlängerung ist notwendig, wenn mit dem Aushärten der Kunststoffe ein langsam verlaufender Formgebungsprozeß einhergeht. Bei der Verwendung der erfindungsgemäßen Ester als Härtungskatalysatoren erfahren die Kunststoffe darüberhinaus gleichzeitig eine flammfeste Ausrüstung.

Als säurehärtende Kunststoffe wären in erster Linie Phenol-Formaldehyd-Harze (Resole) zu nennen. Die erfindungsgemäßen Ester werden derartigen Harzmassen vorzugsweise in einer solchen Menge einverleibt, daß eine P₂O₅-Konzentration im Bereich von 1,0 bis 4,0 Gew.-%, insbesondere im Bereich von 1,5 bis 3,5 Gew.-%, resultiert.

Als saure Katalysatoren für den oben genannten Zweck sind insbesondere solche Borsäure-Phosphorsäure-Ester geeignet, die aus Gemischen von Mono- und Diestern mit einem Diesteranteil von 10 bis 60 Gew.-% bestehen. Vorzugsweise enthalten die zur Herstellung derartiger Ester verwendeten Polyole bzw. Polyolgemische im Durchschnitt 2 bis 4 OH-Gruppen, insbesondere 2,5 bis 3,25 OH-Gruppen pro Molekül.

Weiterhin wurde gefunden, daß die Ester zum gezielten Steuern des Schäumens von Phenol-Formaldehyd-Harzen in Verbindung mit dem Härtungsprozeß geeignet sind. Dies gilt besonders für Harze, die noch über einen gewissen überschüssigen Anteil an freiem Formaldehyd oder anderen leicht verdampfbaren Stoffen verfügen. Bei derartigen Harzgemischen findet während des Aushärtens ein starkes Aufblähen des Reaktionsgemisches statt. Nach dem Aushärten liegt das Harz in Form eines festen Schaumes mit geschlossenen Hohlräumen (Zellen) vor. Das Raumgewicht der ausgehärteten Phenol-Formaldehyd-Harze wird von durchschnittlich 1,19 kg/l bei den ungeschäumten Proben auf Werte von 0,4 bis 0,7 kg/l bei den geschäumten Proben reduziert. Dies führt zu einer Volumenvergrößerung von 170 bis 300%.

Es wurde nun gefunden, daß die Veränderung des Volumens bzw. des Raumgewichts von der Art der als Härter verwendeten gemischten Borsäure-Phosphorsäure-Ester abhängig ist. Somit sind die erfindungsgemäßen Borsäure-Phosphorsäure-Ester geeignet, den Schäumungsprozess von z.B. Phenol-Formaldehyd-Harzen zu steuern.

Vorzugsweise werden Härtung und Schäumung der Phenol-Formaldehyd-Harze mit den Estern bei ungefähr 40°C durchgeführt.

Schließlich ist ein weiteres Anwendungsgebiet der Ester im Pflanzenschutz zur akuten Bekämpfung von Bormangelkrankheiten gegeben. Zu diesem Zweck werden vorzugsweise Kalium- und/oder Ammoniumsalze der erfindungsgemäßen Ester verwendet.

Die Borsäure hat die Funktion eines Mikronährstoffs, insbesondere für Zuckerrüben. Bei einem Bormangel kommt es zum Auftreten von Herz- und Trockenfäule. Normalerweise wird der Borbedarf durch borhaltige Düngemittel befriedigt. Jedoch treten im Boden Wechselwirkungen zwischen den löslichen Borsäureverbindungen und den Kalziumionen auf, die zu einer Fixierung des Bors im Boden führen. So kann es zu Bormangelerscheinungen kommen, die insbesondere im Zuckerrübenanbau zu erheblichen Ernteausfällen führen können.

Es wurde gefunden, daß die Borsäure-Phosphorsäure-Ester insbesonder in Form ihrer Kalium- und/oder Ammoniumsalze zur Bekämpfung dieser akut auftretenden Bormangelkrankheiten verwendet werden können. Die Anwendung zu diesem Zweck kann z.B. durch eine Art Kopf düngung in Form einer 0,2 bis 0,5%igen Spritzbrühe erfolgen. Die Boraufnahme der Pflanzen erfolgt dabei nicht über die Wurzel, sondern direkt an der befallenen Blattmasse und ist sofort wirksam, da die Borsäurekomponente in organischer Bindungsform vorliegt. Der Bedarf an erfindungsgemäßem Ester hängt von der Stärke des Bormangels ab. Normalerweise liegt er im Bereich von 10 bis 20 kg Ester/ha.

Die folgenden Beispiele und Ausführungsbeispiele sollen die vorliegende Erfindung weiter veranschaulichen, ohne deren Umfang zu beschränken. Soweit nicht anders angegeben, beziehen sich Teile und Prozentsätze auf das Gewicht.

### Beispiel 1

In einen 1500 ml Rundkolben wurden eingewogen:

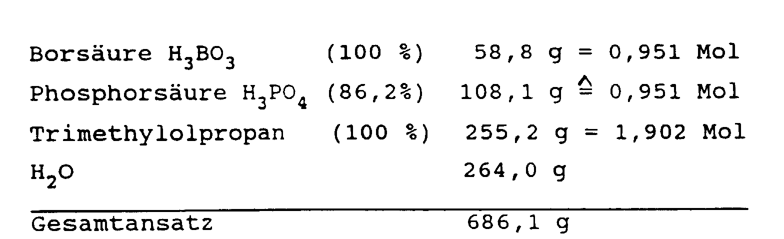

Die resultierende Mischung wurde auf 75°C erwärmt, bis eine klare Lösung vorlag. Danach wurde der Rundkolben an einen Vakuum-Rotationsverdampfer angeschlossen und es wurde unter Vakuum Wasser abdestilliert. Der Druck wurde langsam (innerhalb von 20 min) auf 29 mbar reduziert. Nach 65 min konnte kein weiteres Abdestillieren des Wassers beobachtet werden. Der Kolben blieb insgesamt 120 min an den Rotationsverdampfer angeschlossen. Die Badtemperatur betrug 98°C. Danach wurde der Kolben vom Rotationsverdampfer entfernt, getrocknet und ausgewogen. Der Reaktionsrückstand wurde zu 355,4 g bestimmt. Der Veresterungsgrad (Esterzahl) errechnet sich aus der Molzahl des Reaktionswassers, dividiert durch die Molzahl des eingesetzen Polyols.

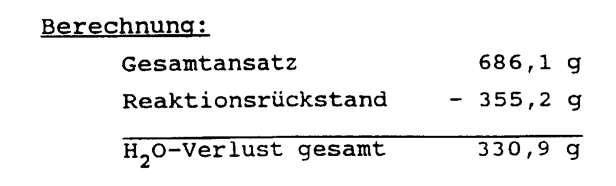

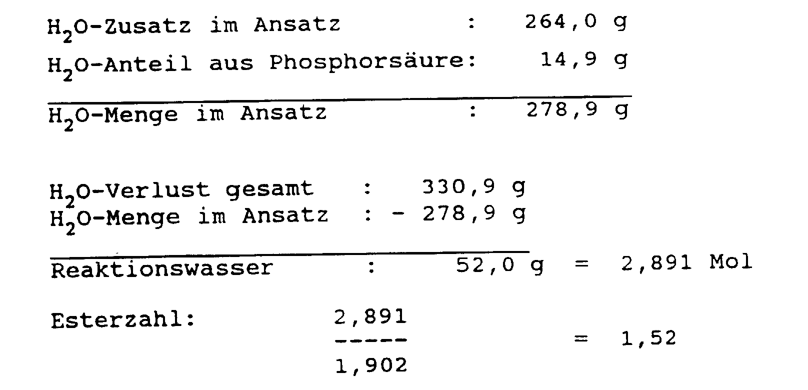

Somit wurden im Durchschnitt 1,52 OH-Gruppen des Polyols bei der Reaktion verestert.

Das Produkt ist eine fließfähige, klare, leicht gelblich gefärbte, pastöse Masse mit einem B₂O₃-Gehalt von 9,3% und einem P₂O₅-Gehalt von 19,3%.

### Beispiel 2

Wie in Beispiel 1 beschrieben, wird folgendes Ansatzgemisch in einem 750 ml-Kolben einer Veresterungsreaktion unterzogen:

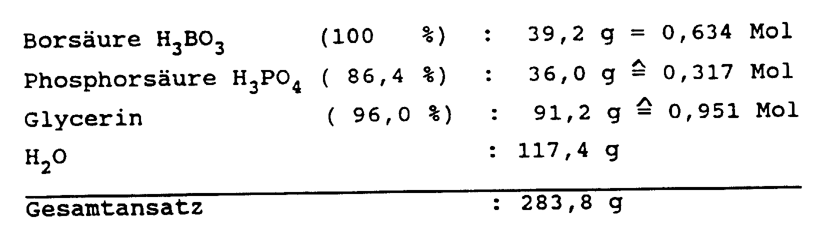

| | |
|---|---|
| Druck | 61 mbar |
| Zeit | 120 min |
| Badtemperatur | 98°C |
| Reaktionsrückstand | 128,4 g |

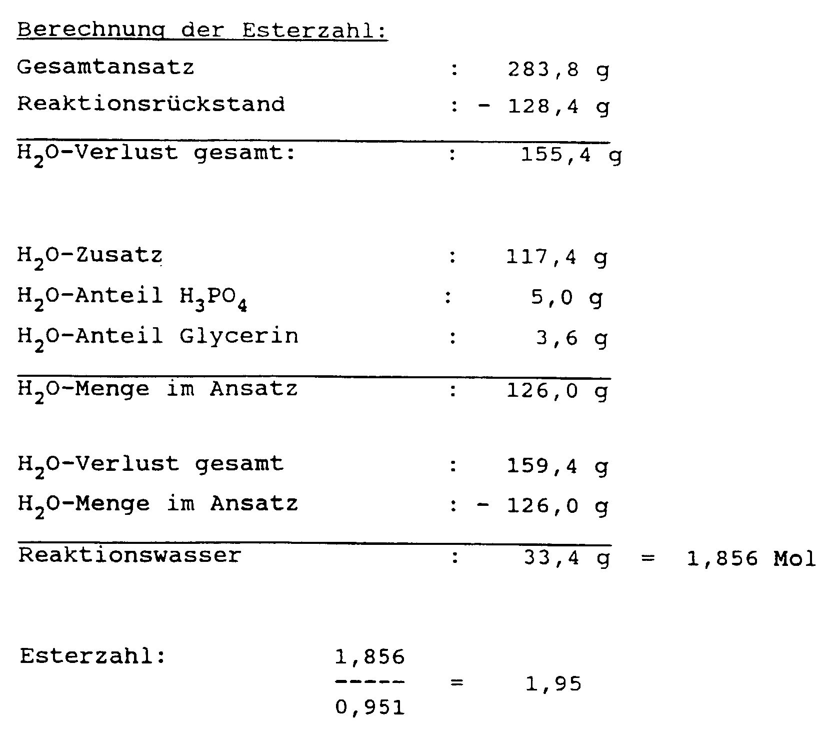

B- bzw. P-Gehalt des Reaktionsproduktes:
17,9 Gew.-% B₂O₃
18,2 Gew.-% P₂O₅
Fließfähige, opake Paste, nach dem Erkalten fest.

### Beispiel 3

Wie in Beispiel 1 beschrieben, wird folgender Ansatz in einem 750 ml-Kolben zur Reaktion gebracht:

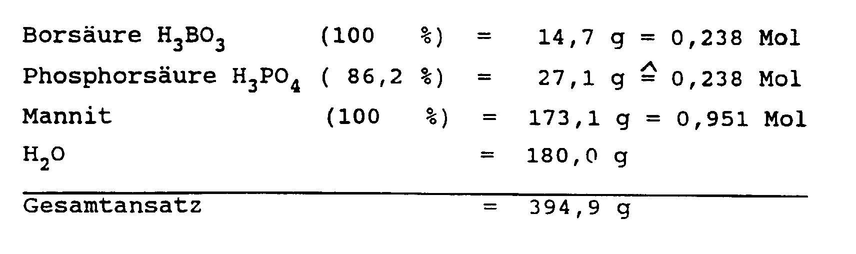

| | |
|---|---|
| Druck | 69 mbar |
| Zeit | 120 min |
| Temperatur | 98°C |
| Reaktionsrückstand | 200,1 g |

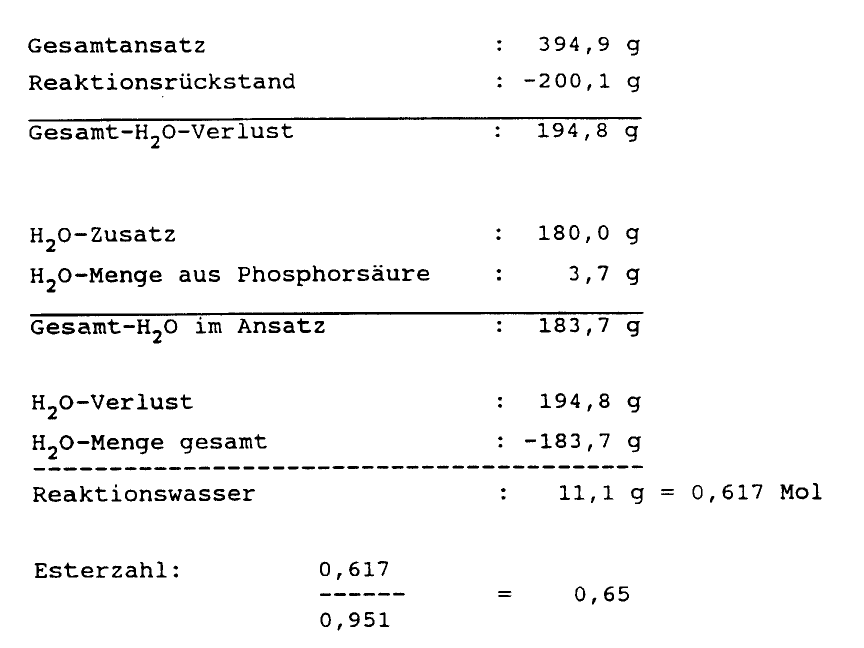

B- und P-Gehalt des Reaktionsproduktes:
4,1 Gew.-% B₂O₃
8,4 Gew.-% P₂O₅

Das Produkt ist eine feste, weiße Masse.

### Beispiel 4

Wie in Beispiel 1 beschrieben, wird folgender Ansatz in einem 750 ml-Kolben einer Veresterungsreaktion unterzogen:

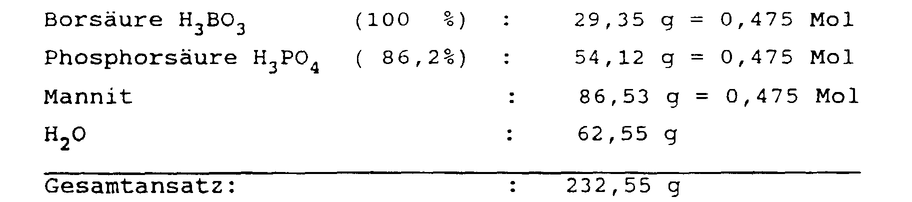

| | |
|---|---|
| Druck | 53 mbar |
| Zeit | 140 min |
| Badtemperatur | 98°C |
| Reaktionsrückstand | 145,30 g |

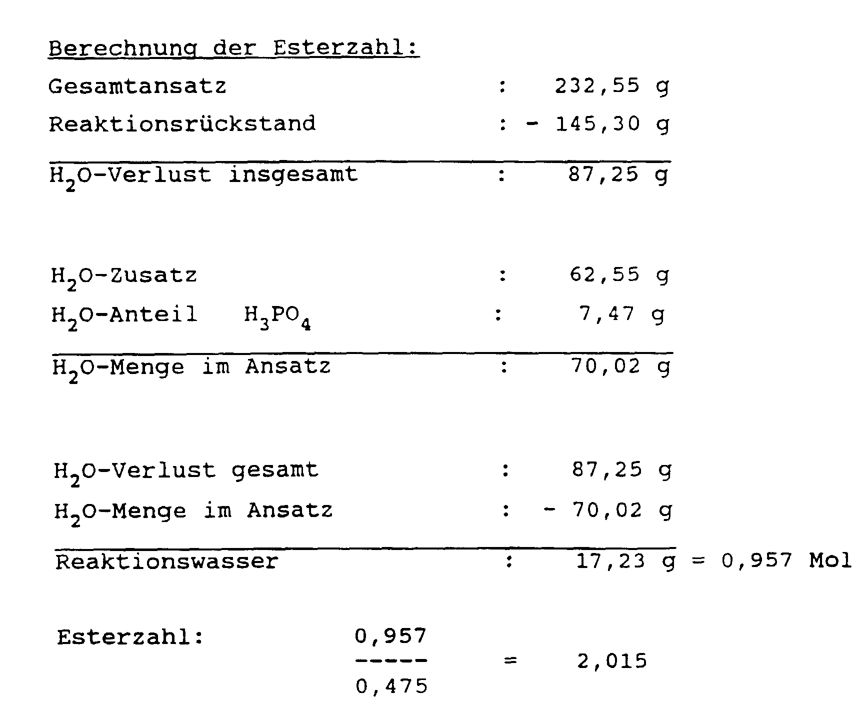

B- und P-Gehalt des Reaktionsproduktes:
11,4 Gew.-% B₂O₃
23,3 Gew.-% P₂O₅

Das Produkt ist eine feste, klare, glasartige Masse.

### Beispiel 5

Wie in den Beispielen 1 und 4 beschrieben, wurde das Ansatzgemisch aus Beispiel 4 einer Veresterungsreaktion unterzogen jedoch wurde in Abänderung von Beispiel 1 und 4 die Badtemperatur auf 125°C angehoben.

| | |
|---|---|
| Druck | 35 mbar |
| Zeit | 120 min |
| Badtemperatur | 125°C |
| Reaktionsrückstand | 140,99 g |

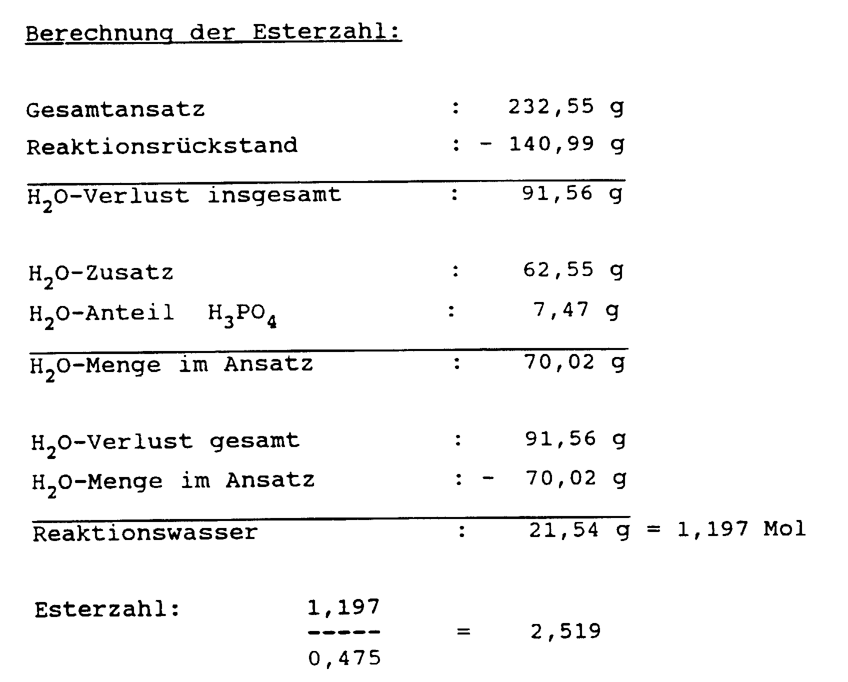

B- und P-Gehalt des Reaktionsproduktes:
11,7 Gew.-% B₂O₃
23,9 Gew.-% P₂O₅

Das Produkt ist eine feste, leicht trübe, glasartige Masse.

### Beispiel 6

In einen 750 ml-Rundkolben wurden eingewogen:

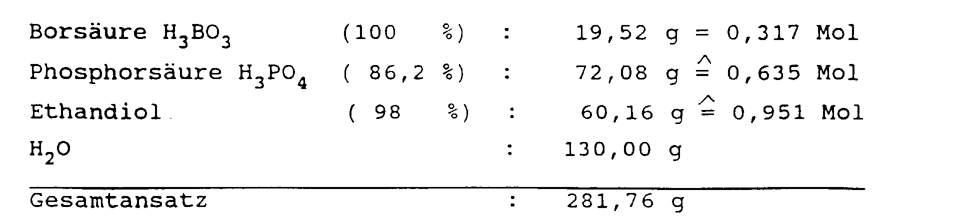

Der Rundkolben wurde mit einem schnell laufenden Ankerrührer versehen und ausgewogen. Danach wurde der Kolben mit dem Rührer an eine Vakuumdestille angeschlossen und das Wasser wurde unter starkem Rühren aus dem Reaktionsgemisch entfernt. Der Druck wurde langsam (innerhalb von 35 min) auf 57 mbar reduziert. Die Heizbadtemperatur betrug 105°C. Nach einer Gesamtlaufzeit von 185 min konnte kein weiteres Abdestillieren von Wasser beobachtet werden.

Danach wurde der Rundkolben mit dem Rührwerk zurückgewogen. Der Reaktionsrückstand wurde zu 120,78 g bestimmt.

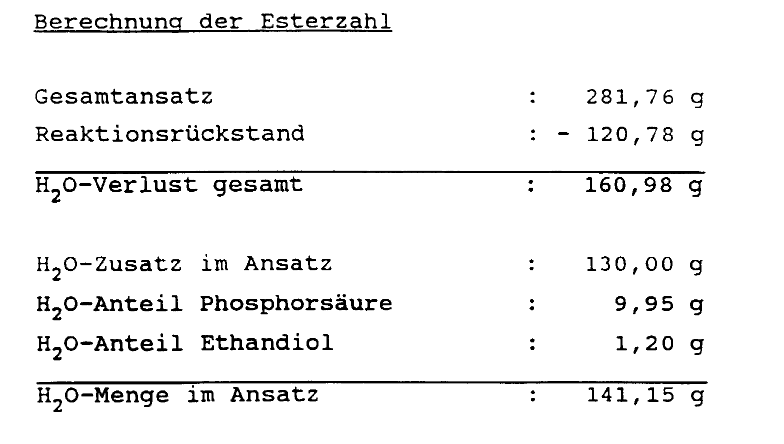

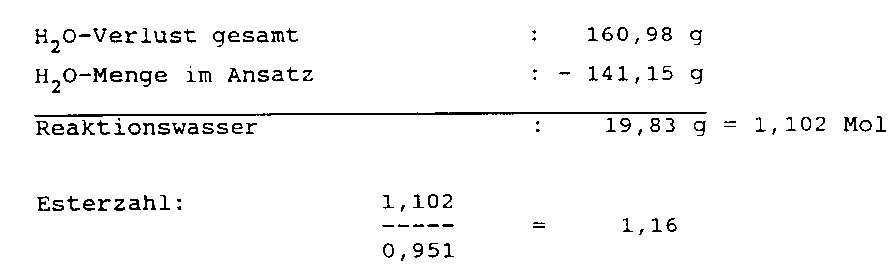

B- und P-Gehalt des Reaktionsproduktes:
9,1 Gew.-% B₂O₃
37,3 Gew.-% P₂O₅

Fließfähige, opake Masse, nach dem Erkalten pastös.

### Anwendungsbeispiel 1

Es wurden die flammhemmenden Eigenschaften der Borsäure-Phosphorsäure-Ester an Filterpapieren getestet. Zu diesem Zweck wurden Filterpapiere des Typs "Schleicher-Schüll 597" mit einer 10%igen wäßrigen Lösung eines Esters getränkt und anschließend getrocknet, worauf die Ester-Aufnahme durch Auswiegen bestimmt und die so behandelten Filterpapiere 15 Sekunden lang mit einer Gasflamme beflammt wurden. Die Ester-Aufnahme der Filterpapiere betrug im Durchschnitt 22,2 Gew.-% (± 15% rel.).

Als positiv wurden die Proben beurteilt, bei denen ein Entzünden der Testpapiere nicht erreicht werden konnte. Dazu sind besonders vorteilhaft Ester und deren Gemische einsetzbar, die im Durchschnitt etwa 1,3 veresterte OH-Gruppen pro im Ester anwesendem Polyolmolekül aufweisen. Gleichzeitig sollte das mittlere Molekulargewicht dieser Polyole etwa 85 betragen und sie sollten im Durchschnitt 2 bis 3 OH-Gruppen aufweisen.

Bei dem obigen Versuch wurde gefunden, daß im Durchschnitt ein P₂O₅-Gehalt von etwa 7,0 Gew.-% und ein B₂O₃-Gehalt von etwa 2,0 Gew.-%, bezogen auf die Papiermenge, bereits ausreichend ist, um ein Abbrennen der Testpapiere zu verhindern. Damit wird die Brandsicherheitsklasse B3 gemäß DIN 4102/Teil 1 erreicht.

### Anwendungsbeispiel 2

Der im Anwendungsbeispiel 1 beschriebene Versuch wurde mit Baumwollgeweben wiederholt. Dazu wurden Baumwollstoffstücke (90 x 190 mm) 5 Minuten lang in eine 10%ige wäßrige Polyethyleniminlösung getaucht. Die Temperatur der Lösung betrug 80 bis 90°C. Danach wurden die Stoffstücke abgequetscht und ca. 15 Minuten im Trockenschrank bei 100°C getrocknet. Daraufhin wurden sie 5 Minuten in eine 10%ige Lösung der erfindungsgemäßen Ester getaucht, abgequetscht und wieder getrocknet. Die auf die Baumwollstücke aufgezogene Menge an Flammschutzmittel (Ester) wurde über das Gewicht vor und nach dem Auftragen bestimmt. Das Brandverhalten wurde in einem Brennkasten nach DIN 50050 geprüft. Dabei wurden die Textilstücke 15 Sekunden in der Prüfvorrichtung beflammt. Vor Ende von 20 Sekunden durfte die Flammspitze die Meßmarke von 150 mm nicht erreicht haben. Die Probestücke, die diese Anforderung erfüllen, entsprechen der Brandsicherheitsklasse B3 nach DIN 4102.

Es wurden folgende Ergebnisse erhalten:

Die Ester-Aufnahme des Baumwollgewebes betrug im Durchschnitt 22,8 Gew.-% (± 16% rel.). Zu besonders vorteilhaften Ergebnissen führen Ester oder deren Gemische, bei denen pro im Ester vorhandenem Polyolmolekül durchschnittlich etwa 1,5 OH-Gruppen verestert sind. Weiterhin weisen derartige Ester vorzugsweise einen ungefähr gleich großen Mono- und Diesteranteil (bezogen auf die Säure) auf. Die zur Herstellung dieser Ester verwendeten Polyole sind vorzugsweise solche mit einem durchschnittlichen Molekulargewicht von etwa 110, die im Durchschnitt etwa 3,5 OH-Gruppen aufweisen.

Bei den obigen Testversuchen wurde gefunden, daß im Durchschnitt ein P₂O₅-Gehalt von etwa 5,7% und ein B₂O₃-Gehalt von etwa 2,9%, bezogen auf das Baumwollgewebe, bereits ausreichend ist, um die Anforderungen der Brandsicherheitsklasse B3 nach DIN 4102 zu erfüllen.

### Anwendungsbeispiel 3

Es wurden Teppichproben mit wäßrigen Lösungen der Ester flammfest ausgerüstet und gemäß den Vorschriften von DIN 54333 auf ihr Brennverhalten hin getestet. Dabei wurde gefunden, daß im Durchschnitt ein P₂O₅-Gehalt von etwa 7,7 Gew.-% und ein B₂O₃-Gehalt von etwa 2,1 Gew.-%, bezogen auf die unbehandelte Teppichmenge, bereits ausreichend ist, um die Flammenausbreitungsgeschwindigkeit V_{B} im Durchschnitt auf 19 mm/min zu begrenzen. Ein Nachglimmen der Teppichproben trat nicht auf.

### Anwendungsbeispel 4

Am Beispiel von säurehärtenden Phenol-Formaldehyd-Harzen (Resol-Typ) wurde der Einfluß der gemischten Borsäure-Phosphorsäure-Ester auf den Verlauf des Härtungsprozesses dieser Harze untersucht.

In einem offenen Becher wurden 100 g eines Phenol-Formaldehyd-Harzes mit verschiedenen Mengen unterschiedlich zusammengesetzter Borsäure-Phosphorsäure-Ester intensiv gemischt. Die Borsäure-Phosphorsäure-Ester wurden in Form einer wäßrigen Lösung, bestehend aus 75 Gew.-% Ester, 5 Gew.-%-Toluolsulfonsäure und 20 Gew.-% Wasser, eingesetzt. Es wurde die Zeitspanne zwischen Ester-Zugabe und Beginn der Harzaushärtung (Topfzeit) bestimmt. Die Versuche wurden im Trockenschrank bei einer konstanten Temperatur von 40°C durchgeführt.

Bei den obigen Versuchen zeigte es sich, daß die Topfzeit des Harz-Ester-Gemisches umgekehrt proportional zur P₂O₅-Konzentration ist, die vom eingesetzten Ester herrührt. Als Mittelwerte aus je 3 Versuchen wurden folgende Abhängigkeiten gefunden:

| P₂O₅-Gehalt des Harzes (%) : | | | | | | | |
|---|---|---|---|---|---|---|---|
| 3,55 | 3,30 | 2,83 | 2,65 | 2,50 | 2,45 | 2,00 | 1,54 |

| Topfzeit (min): | | | | | | | |
|---|---|---|---|---|---|---|---|
| 5,0 | 7,1 | 10,8 | 12,3 | 17,7 | 18,0 | 21,6 | 25,0 |

Die obigen Ergebnisse zeigen, daß mit abnehmendem P₂O₅-Gehalt des Harzes die Topfzeit desselben linear zunimmt.

### Anwendungsbeispiel 5

Es wurde ein Phenol-Formaldehyd-Harz mit einem freien Formaldehyd-Gehalt von 2,5 Gew.-% gehärtet und geschäumt. Der Versuch wurde unter den im Ausführungsbeispiel 4 beschriebenen Bedingungen durchgeführt. Die Veränderung der Raumgewichte wurde durch Auswiegen und Auslitern der geschäumten Proben bestimmt.

Die erhaltenen Ergebnisse sind im folgenden als Mittelwert aus je 4 Versuchen zusammengefaßt:

| Raumgewicht des Harzes (kg/l) | P₂O₅-und B₂O₃-Gehalt im Harz (%) | | | Ester-Zahl der Borsäure-Phosphorsäure-Ester |
|---|---|---|---|---|
| | P₂O₅ | B₂O₃ | Summe | |
| 0,436 | 1,90 | 0,77 | 2,67 | 1,60 |
| 0,541 | 2,07 | 0,94 | 3,01 | 1,45 |
| 0,573 | 2,32 | 0,69 | 3,01 | 1,33 |
| 0,673 | 2,57 | 0,63 | 3,20 | 1,11 |

Die obige Tabelle zeigt, daß neben der Konzentration von P₂O₅ und B₂O₃ im Harz die Spezifikation der gemischten Borsäure-Phosphorsäure-Ester, insbesondere die Esterzahl, entscheidend für das Raumgewicht des geschäumten Phenol-Formaldehyd-Harzes ist. Durch die Esterspezifikation kann somit der Schäumungsprozess gesteuert werden.

## Patentansprüche

1. Verfahren zur Herstellung von Borsäure-Phosphorsäure-Estern von Polyolen, dadurch gekennzeichnet, daß man mindestens eine zur Esterbildung befähigte Phosphorverbindung und mindestens eine zur Esterbildung befähigte Borverbindung nebeneinander einer Veresterungsreaktion mit mindestens einem Polyol und/oder einem zur Esterbildung befähigten Derivat davon unterzieht.

2. Verfahren nach Anspruch 1, dadurch gekennzeichnet, daß die Veresterungsreaktion unter kontinuierlicher Entfernung der bei der Reaktion gebildeten Nebenprodukte und des gegebenenfalls eingesetzten Lösungsmittels durchgeführt wird.

3. Verfahren nach irgendeinem der Ansprüche 1 und 2, dadurch gekennzeichnet, daß die zur Esterbildung befähigte Phosphorverbindung aus P₂O₅, Phosphorsäure, Polyphosphorsäuren und Mischungen dieser Verbindungen ausgewählt wird.

4. Verfahren nach irgendeinem der Ansprüche 1 bis 3, dadurch gekennzeichnet, daß die zur Esterbildung befähigte Borverbindung aus B₂O₃, Borsäure, Metaborsäure und Mischungen dieser Verbindungen ausgewählt wird.

5. Verfahren nach irgendeinem der Ansprüche 1 bis 4, dadurch gekennzeichnet, daß das Polyol aus Verbindungen mit 2 bis 12, insbesondere 2 bis 6 OH-Gruppen im Molekül und Mischungen davon ausgewählt wird.

6. Verfahren nach irgendeinem der Ansprüche 1 bis 5, dadurch gekennzeichnet, daß das Polyol aus Verbindungen mit 2 bis 20, insbesondere 2 bis 6 Kohlenstoffatomen und Mischungen davon ausgewählt wird.

7. Verfahren nach irgendeinem der Ansprüche 1 bis 6, dadurch gekennzeichnet, daß die Polyolkomponente aliphatische und/oder cycloaliphatische Verbindungen umfaßt.

8. Verfahren nach irgendeinem der Ansprüche 1 bis 7, dadurch gekennzeichnet, daß die Polyolkomponente Verbindungen mit einem Molekulargewicht von 62 bis 182 umfaßt.

9. Verfahren nach irgendeinem der Ansprüche 1 bis 8, dadurch gekennzeichnet, daß das Polyol ausgewählt wird aus Ethandiol, 1,2- und 1,3-Propandiol, 1,2-, 1,3-, 1,4- und 2,3-Butandiol, Pinacol, Glycerin, Trimethylolmethan, Trimethylolethan, Trimethylolpropan, Erythrit, Pentaerythrit, Di- und Polypentaerythriten, Pentiten, Hexiten, Inositen, 1,4-Dimethylolbenzol, 2,4-Dimethylol-1,3-dihydroxybenzol, Dihydroxybenzolen und Mischungen von zwei oder mehr dieser Verbindungen.

10. Verfahren nach irgendeinem der Ansprüche 1 bis 9, dadurch gekennzeichnet, daß ein Atomverhältnis B/P im Bereich von 9/1 bis 1/9, insbesondere 7/3 bis 3/7, gewählt wird.

11. Verfahren nach irgendeinem der Ansprüche 1 bis 10, dadurch gekennzeichnet, daß das Molverhältnis von Polyolen zu insgesamt vorhandenen Bor- und Phosphorverbindungen nicht höher als 3/1, insbesondere nicht höher als 2/1, gewählt wird.

12. Verfahren nach irgendeinem der Ansprüche 1 bis 11, dadurch gekennzeichnet, daß pro Mol Phosphorverbindung plus Borverbindung mindestens 2, und insbesondere mindestens 3, Moläquivalente Polyol eingesetzt werden.

13. Verfahren nach irgendeinem der Ansprüche 1 bis 12, dadurch gekennzeichnet, daß die Reaktanten in wäßriger Lösung eingesetzt werden.

14. Verfahren nach Anspruch 13, dadurch gekennzeichnet, daß der Wassergehalt der wäßrigen Lösung am Anfang im Bereich von 15 bis 55, insbesondere von 20 bis 40 Gew.-% liegt.

15. Verfahren nach irgendeinem der Ansprüche 13 und 14, dadurch gekennzeichnet, daß die Umsetzung bei einer Temperatur von 90 bis 130°C, insbesondere 95 bis 125°C, erfolgt.

16. Verfahren nach irgendeinem der Ansprüche 1 bis 15, dadurch gekennzeichnet, daß die Umsetzung unter vermindertem Druck, vorzugsweise bei einem Druck von 20 bis 60 mbar, durchgeführt wird.

17. Verfahren nach irgendeinem der Ansprüche 13 bis 16, dadurch gekennzeichnet, daß die Umsetzung unter Dünnschichtverdampfung des Lösungswassers und des Reaktionswassers erfolgt.

18. Verfahren nach irgendeinem der Ansprüche 1 bis 17, dadurch gekennzeichnet, daß es kontinuierlich durchgeführt wird.

19. Verfahren nach irgendeinem der Ansprüche 1 bis 18, dadurch gekennzeichnet, daß das Polyol ausgewählt wird aus Ethandiol, 1,2- und 1,3-Propandiol, 1,2-, 1,3-1,4- und 2,3-Butandiol, Pinacol, Glycerin, Trimethylolmethan, Trime-thylolethan, Trimethylolpropan, Erythrit, Pentaerythrit, Di- und Polypentaerythriten, Pentiten, Hexiten, Inositen, 1,4-Dimethylolbenzol, 2,4-Dimethylol-1,3-dihydroxybenzol, Dihydroxybenzolen und Mischungen von zwei oder mehr dieser Verbindungen.

20. Verwendung eines nach irgendeinem der Ansprüche 1 bis 19 hergestellten Esters zur Flammschutzausrüstung von brennbaren Materialien, inbesondere von Papier, Papierprodukten, Wellpappe, Holz, Kunststoffen, Baustoffen und textilen Materialien.

21. Verwendung eines nach irgendeinem der Ansprüche 1 bis 19 hergestellten Esters als saurer Katalysator zur Aushärtung von säurehärtenden Kunststoffen, insbesondere von Phenol-Formaldehyd-Harzen von Resol-Typ.

22. Verwendung eines nach irgendeinem der Ansprüche 1 bis 19 hergestellten Esters zur Steuerung des Schäumungsprozesses von Phenol-Formaldehyd-Harzen.

23. Verwendung eines nach irgendeinem der Ansprüche 1 bis 19 hergestellten Esters zur Bekämpfung von Bormangelkrankheiten bei Pflanzen, insbesondere bei Nutzpflanzen.

## Claims

1. Method of manufacturing boric acid-phosphoric acid esters of polyols, characterised in that at least one phosphorus compound capable of ester formation and at least one boric compound capable of ester formation are together subjected to an esterification reaction with at least one polyol and/or a derivate thereof capable of ester formation.

2. Method according to claim 1, characterised in that the esterification reaction is carried out with continuous removal of the by-products formed during the reaction, and of any solvent used.

3. Method according to any one of claims 1 and 2, characterised in that the phosphorus compound capable of ester formation is selected from P₂O₅, phosphoric acid, polyphosphoric acid and mixtures of these compounds.

4. Method according to any one of claims 1 to 3, characterised in that the boric compound capable of ester formation is selected from B₂O₃, boric acid, metaboric acid and mixtures of these compounds.

5. Method according to any one of claims 1 to 4, characterised in that the polyol is selected from compounds with 2 to 12, particularly 2 to 6 OH-groups in the molecule and mixtures thereof.

6. Method according to any one of claims 1 to 5, characterised in that the polyol is selected from compounds with 2 to 20, particularly 2 to 6 carbon atoms, and mixtures thereof.

7. Method according to any one of claims 1 to 6, characterised in that the polyol component comprises aliphatic and/or cycloaliphatic compounds.

8. Method according to any one of claims 1 to 7, characterised in that the polyol component comprises compounds with a molecular weight of 62 to 182.

9. Method according to any one of claims 1 to 7, characterised in that the polyol is selected from ethane diol, 1,2- and 1,3-propane diol, 1,2-, 1,3-, 1-4 and 2,3-butane diol, pinacol, glycerine, trimethylol methane, trimethylol ethane, trimethylol propane, erithrytol, pentaerithrytol, di- and polypentaerythitols, pentites, hexitols, inositols, 1,4-dimethylol benzol, 2,4-dimethylol-1,3-dihydroxybenzol, dihydroxy benzols and mixtures of two or more of these compounds.

10. Method according to any one of claims 1 to 9, characterised in that an atomic ratio B/P is selected in the range of 9/1 to 1/9, particularly 7/3 to 3/7.

11. Method according to any one of claims 1 to 10, characterised in that the molar ratio of polyols to the totality of boric and phosphoric compounds present is selected as not higher than 3/1, particularly not higher than 2/1.

12. Method according to any one of claims 1 to 11, characterised in that per Mol of phosphoric compound plus boric compound, at least 2, and in particular at least 3 molar equivalents of polyol are used.

13. Method according to any one of claims 1 to 12, characterised in that the reactants are used in an aqueous solution.

14. Method according to claim 13, characterised in that the water content of the aqueous solution lies at the start in the range of 15 to 55, particularly 20 to 40% by weight.

15. Method according to any one of claims 13 and 14, characterised in that the conversion is effected at a temperature of 90 to 130°C, particularly 95 to 125°C.

16. Method according to any one of claims 1 to 15, characterised in that the conversion is carried out under reduced pressure, preferably at a pressure of 20 to 60 mbar.

17. Method according to any one of claims 13 to 16, characterised in that the conversion is carried out by thin-layer evaporation of the solvent water and of the reaction water.

18. Method according to any one of claims 1 to 17, characterised in that it is carried out continuously.

19. Method according to any one of claims 1 to 18, characterised in that the polyol is selected from ethane diol, 1,2- and 1,3-propane diol, 1,2-, 1,3-, 1-4 and 2,3-butane diol, pinacol, glycerine, trimethylol methane, trimethylol ethane, trimethylol propane, erithrytol, pentaerithrytol, di- and polypentaerythitols, pentites, hexitols, inositols, 1,4-dimethylol benzol, 2,4-dimethylol-1,3-dihydroxybenzol, dihydroxy benzols and mixtures of two or more of these compounds.

20. Utilisation of an ester manufactured according to any one of claims 1 to 19 for providing flame protection of combustible materials, particularly of paper, paper products, corrugated cardboard, wood, plastics, building materials and textile materials.

21. Utilisation of an ester manufactured according to any one of claims 1 to 19 as an acidic catalyst for hardening acid-hardening plastics, particularly of the phenol-formaldehyde-resins of resol-type.

22. Utilisation of an ester manufactured according to any one of claims 1 to 19 for controlling the foaming process of phenol-formaldehyde resins.

23. Utilisation of an ester manufactured according to any one of claims 1 to 19 for counteracting boron deficiency ailments in plants, particularly in utility plants.

## Revendications

1. Procédé de préparation d'esters d'acides borique et phosphorique à partir de polyols, caractérisé en ce que l'on soumet à une réaction d'estérification au moins un composé contenant du phosphore susceptible d'être estérifié et au moins un composé contenant du bore susceptible d'être estérifié avec au moins un polyol et/ou un composé susceptible d'être estérifié.

2. Procédé selon la revendication 1, caractérisé en ce que la réaction d'estérification est réalisée par élimination continuelle des sous-produits formés lors de la réaction et du solvant éventuellement introduit.

3. Procédé selon l'une quelconque des revendications 1 ou 2, caractérisé en ce que les composés contenant du phosphore susceptibles d'être estérifiés sont sélectionnés parmi le P₂O₅, l'acide phosphorique, les acides polyphosphoriques et leurs mélanges.

4. Procédé selon l'une quelconque des revendications 1 à 3, caractérisé en ce que les composés contenant du bore susceptibles d'être estérifiés sont sélectionnés parmi le B₂O₃, l'acide borique, l'acide métaborique et leurs mélanges.

5. Procédé selon l'une quelconque des revendications 1 à 4, caractérisé en ce que le polyol est sélectionné parmi les composés comprenant de 2 à 12, de préférence de 2 à 6 groupes OH par molécule, et leurs mélanges.

6. Procédé selon l'une quelconque des revendications 1 à 5, caractérisé en ce que le polyol est sélectionné parmi les composés comprenant de 2 à 20, de préférence de 2 à 6 atomes de carbone, et leurs mélanges.

7. Procédé selon l'une quelconque des revendications 1 à 6, caractérisé en ce que les composés polyols comprennent les composés aliphatiques et/ou cycloaliphatiques.

8. Procédé selon l'une quelconque des revendications 1 à 7, caractérisé en ce que les composés polyols comprennent les composés de poids moléculaire compris entre 62 et 182.

9. Procédé selon l'une quelconque des revendications 1 à 8, caractérisé en ce que le polyol est sélectionné parmi l'éthanediol, le propanediol-1,2 et -1,3, le butanediol-1,2, -1,3, -1,4 et -2,3, le pinacol, la glycérine, le triméthylolméthane, le triméthyloléthane, le triméthylolpropane, l'érythrite, le pentaérythrite, les di- et polypentaérythrites, le pentite, l'hexite, l'inosite, le 1,4-diméthylolbenzol, le 2,4-diméthylol-1,3-dihydroxybenzol, les dihydroxybenzols et les mélanges de deux ou trois de ces composés.

10. Procédé selon l'une quelconque des revendications 1 à 9, caractérisé en ce que le rapport des atomes B/P est compris entre 9/1 et 1/9, de préférence entre 7/3 et 3/7.

11. Procédé selon l'une quelconque des revendications 1 à 10, caractérisé en ce que le rapport molaire entre les polyols et l'ensemble des composés contenant du bore et du phosphore n'est pas plus élevé que 3/1, de préférence 2/1.

12. Procédé selon l'une quelconque des revendications 1 à 11, caractérisé en ce qu'un équivalent molaire de polyol d'au moins 2, de préférence d'au moins 3, est utilisé par mole du total des composés contenant du phosphore et du bore.

13. Procédé selon l'une quelconque des revendications 1 à 12, caractérisé en ce que les réactifs sont utilisés en solution aqueuse.

14. Procédé selon la revendications 13, caractérisé en ce que la teneur en eau de la solution aqueuse est, au départ, comprise entre 15 et 55, de préférence entre 20 et 40 % en poids.

15. Procédé selon l'une quelconque des revendications 13 ou 14, caractérisé en ce que la conversion s'effectue à une température de 90 à 130°C, de préférence de 95 à 125°C.

16. Procédé selon l'une quelconque des revendications 1 à 15, caractérisé en ce que la conversion s'effectue sous une pression réduite, de préférence sous une pression de 20 à 60 mbar.

17. Procédé selon l'une quelconque des revendications 13 à 16, caractérisé en ce que la conversion est réalisée en évaporant l'eau présente dans la solution et l'eau formée lors de la réaction.

18. Procédé selon l'une quelconque des revendications 1 à 17, caractérisé en ce qu'il est réalisé de façon continue.

19. Procédé selon l'une quelconque des revendications 1 à 18, caractérisé en ce que le polyol est sélectionné parmi l'éthanediol, le propanediol-1,2 et -1,3, le butanediol-1,2, -1,3, -1,4 et -2,3, le pinacol, la glycérine, le triméthylolméthane, le triméthyloléthane, le triméthylolpropane, l'érythrite, le pentaérythrite, les di- et polypentaérythrites, le pentite, l'hexite, l'inosite, le 1,4-diméthylolbenzol, le 2,4-diméthylol-1,3-dihydroxybenzol, les dihydroxybenzols et les mélanges de deux ou trois de ces composés.

20. Utilisation d'un ester obtenu à partir de l'une quelconque des revendications 1 à 19 en tant que couche protectrice contre les flammes pour des matériaux combustibles, en particulier le papier, les produits à base de papier, le carton ondulé, le bois, les matières plastiques, les matériaux de construction et les matières textiles.

21. Utilisation d'un ester obtenu à partir de l'une quelconque des revendications 1 à 19 en tant que catalyseur acide pour le durcissement de matières plastiques durcissant à l'acide, de préférence des résines phénol-formaldéhyde du type résol.

22. Utilisation d'un ester obtenu à partir de l'une quelconque des revendications 1 à 19 pour le contrôle d'un procédé de moussage de résines phénol-formaldéhyde.

23. Utilisation d'un ester obtenu à partir de l'une quelconque des revendications 1 à 19 pour la lutte contre la maladie de la déficience en bore chez les plantes, notamment chez les plantes utiles.
